# EUROPEAN PATENT APPLICATION

(11) **EP 3 495 835 A1**
(43) Date of publication of application: **12.06.2019**
(21) Application number: 17205963.6
(22) Date of filing: 07.12.2017
(51) Int. Cl.: G01S 3/04, H04N 5/232, H01Q 1/27

(54) **DIRECTION FINDING SYSTEM AS WELL AS METHOD FOR LOCATING A SOURCE OF A TARGET SIGNAL**

(71) Applicant: Rohde & Schwarz GmbH & Co. KG, 81671 München (DE)
(72) Inventor: Dingal, Roland Ray Garupa, 460125 Singapore (SG)
(74) Representative: Prinz & Partner mbB

(57) **Abstract**

A direction finding system (10) for locating a source of a target signal, in particular a radio frequency signal, with at least one directional antenna (12), at least one camera (14, 14') for capturing a video and at least one analysis unit (18), wherein the direction (D_{c}) of the at least one camera and the direction (Dₐ) of the at least one directional antenna are aligned with respect to each other in a known relation, wherein the at least one camera and the at least one directional antenna are connected to the at least one analysis unit, the analysis unit being configured to receive the video captured by the at least one camera, to receive signals picked up by the at least one directional antenna, to determine the direction the target signal is coming from and to highlight the direction the target signal is coming from in the video creating a highlighted video.

## Description

The invention relates to a direction finding system for locating a source of a target signal, in particular a radio frequency signal, as well as a method for locating a source of a target signal, in particular a radio frequency signal.

In many situations, it is necessary to locate the source of a signal. In most cases, the source of a target signal has to be located because the target signal is an interfering signal meaning that the target signal interferes with a telecommunication signal or the like. The quality of the telecommunication signal decreases due to the interfering signal. Thus, the source of the interfering or target signal has to be located and shut off in order to increase the quality of the telecommunication signal.

Locating the source of the interfering signal is a tedious task because the direction to the source of the target signal has to be determined using numeric displays of magnitudes and directions of the target signal. Thus, interference hunting is time consuming and requires a high level of skill.

It is therefore the object of the invention to provide a direction finding system as well as a method for locating a source of a target signal, in particular a radio frequency signal, that is easy to use and allows a quick and intuitive localization of the source of the target signal.

For this purpose, a direction finding system is provided for locating a source of a target signal, in particular a radio frequency signal, with at least one directional antenna, at least one camera for capturing a video and at least one analysis unit. The direction of the at least one camera and the direction of the at least one directional antenna are aligned with respect to each other in a known, especially predefined relation. The at least one camera and the at least one directional antenna are electrically and/or wirelessly connected to the at least one analysis unit. The analysis unit is configured to receive the video captured by the at least one camera; to receive signals picked up by the at least one directional antenna; to determine the direction the target signal is coming from; and to highlight the direction the target signal is coming from in the video creating a highlighted video.

The direction of directional antenna is regarded as the direction of the main lobe, and the direction of camera is regarded as the center of the field of view of the camera.

This way, the location of the target signal is directly included into visual information about the environment so that the direction finding system can be used with little or no training in an intuitive way.

The target signal may be an air borne signal, e.g. an electromagnetic wave. For example, the target signal is an interfering signal.

Further, the direction that the target signal is coming from is determined by triangulation or any other known technique.

Preferably, the alignment information about the alignment of the direction of the at least one camera with respect to the direction of the at least one directional antenna is predefined and stored in the at least one analysis unit or the at least one analysis unit is configured to determine the alignment information. This has the advantage that either a pre-mounted system can be used or a system where the camera and the directional antenna are moveable independently from one another.

The determination of the alignment information may be done using data of motion and location sensors, like an accelerometer, a GPS sensor, a gyroscope, a compass, a tilt sensor or the like fixed to the directional antenna and the camera, respectively.

Preferably, the direction finding system comprises at least one display unit electrically and/or wirelessly connected to the at least one analysis unit, the at least one analysis unit being configured to transmit the highlighted video to the at least one display unit and the display unit being configured to show the highlighted video. In this manner, an augmented reality for the user is created facilitating the hunt for the target or interfering signal.

Further, the direction of the target signal may also be shown on the display unit outside the highlighted video.

In one embodiment of the invention, the at least one camera is configured to capture the video in real-time, and the at least one analysis unit is configured to create the highlighted video in real-time and, in particular, the at least one display unit is configured to show the highlighted video in real time eliminating waiting times for the user.

In an aspect of the invention, the at least one analysis unit is configured to determine the magnitude of the target signal and to create the highlighting in the video depending on the determined magnitude allowing a faster detection of the source of the target signal.

For intuitive usage, the at least one camera and the at least one directional antenna point in the same direction.

For example, the at least one camera is mounted on the at least one directional antenna facilitating the alignment.

In another aspect, the at least one analysis unit comprises the at least one display unit providing a compact device.

In another embodiment, the direction finding system comprises at least one device separate from the at least one analysis unit, wherein the at least one device includes the at least one display unit and/or the at least one camera allowing a more flexible use of the system.

The device may be a network connected device, in particular a mobile device, for instance a smart phone or a tablet, and/or a mounted device, for instance a TV-screen or a refrigerator door. Thus, the display unit comes at no or little extra costs. Moreover, any suitable device having a network interface can be used for displaying the highlighted video, in particular in real time.

For versatile use, the at least one analysis unit is at least part of a spectrum analyzer.

Further, a method for locating a source of a target signal, in particular a radio frequency signal, is provided using a direction finding system, in particular according to the invention, having at least one directional antenna, at least one camera for capturing a video and at least one analysis unit, the method comprising the following steps:
a) pointing the at least one directional antenna towards the direction with the highest magnitude of the target signal,
b) pointing the at least one camera in essentially the same direction as the at least one directional antenna,
c) receiving by the analysis unit the video captured by the at least one camera and signals picked up by the at least one directional antenna,
d) determining by the at least one analysis unit the direction the target signal is coming from, and
e) highlighting in the video by the at least one analysis unit the direction the target signal is coming from, creating a highlighted video using alignment information about the alignment of the direction of the at least one camera with respect to the direction of the at least one directional antenna.

The alignment information about the alignment is predefined and stored in the at least one analysis unit or determined by the at least one analysis unit.

In addition or as an alternative, the highlighted video is shown on at least one display unit of the direction finding system; the video is captured in real-time, the highlighted video is created in real-time and, in particular, the highlighted video is shown in real time; and the magnitude of the target signal is determined by the at least one analysis unit, the highlighting in the video being created depending on the determined magnitude.

Further features and advantages of the invention will be apparent from the following description and the attached claims, to which reference is made. In the claims:
- Figure 1 shows a direction finding system according to the invention,
- Figure 2 shows a symbolic picture of a user using the direction finding system of Figure 1 carrying out a method according to the invention, and
- Figures 3a to 3c show illustrations of the display of the direction finding system according to Figure 1 in different situations while executing the method of the invention.

The detailed description set forth below in connection with the appended drawings, where like numerals reference like elements, is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the claimed subject matter to the precise forms disclosed.

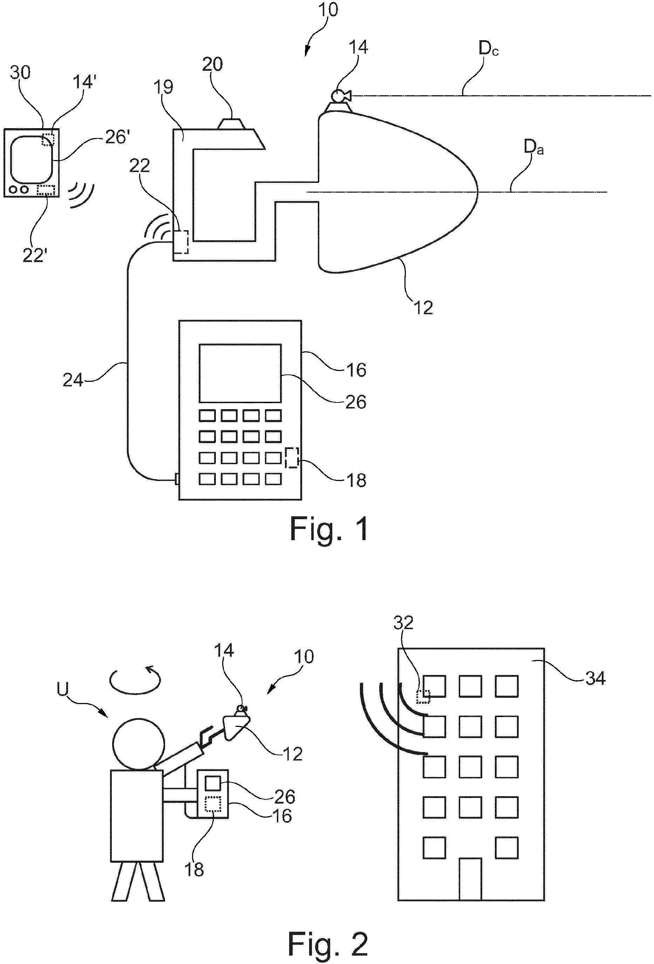

A direction finding system 10 is shown in Figure 1 having a directional antenna 12, a camera 14 for capturing a video and a (mobile) spectrum analyzer 16 having an analysis unit 18.

The directional antenna 12 is an antenna for radio frequency signals with a radiation pattern having a large but narrow main lobe so that the antenna picks up signals mainly from a well-defined direction. The direction of the main lobe is considered to be the direction Dₐ of the directional antenna 12.

The directional antenna 12 is, for example, a log-periodic antenna or a Yagi antenna.

The directional antenna 12 comprises a handle 19 for holding the directional antenna 12 in a hand.

Various sensors 20 being motion and/or location sensors, like an accelerometer, a GPS sensor, a gyroscope, a compass, a tilt sensor or the like, are assigned to the directional antenna 12. In the shown embodiment, the sensors 20 are provided in the directional antenna 12, in particular arranged at the end of the handle 19.

The sensors 20 are used to determine the position and the alignment of the directional antenna 12.

The directional antenna 12 may also have a control unit 22 connected with the sensors 20 to determine the positions an alignment of the directional antenna 12. Alternatively, these data are sent to the analysis unit 18 for determining the alignment properties.

Further, the control unit 22 may comprise a wireless connectivity module, for example a Bluetooth or Wi-Fi module for communicating wirelessly.

The camera 14 is a digital camera and captures a video. For example, the camera 14 is a CMOS-camera.

In the shown embodiment, the camera 14 is mounted on top of the directional antenna 12 pointing in the same direction as the direction Dₐ of the directional antenna 12. In other words, the direction Dₐ of the directional antenna 12 and the direction D_{c} of the camera 14 are running parallel to each other and in the same direction.

The direction D_{c} of the camera 14 is regarded as the direction being in the center of the field of view of the camera 14.

This way, the alignment of the direction D_{c} of the camera 14 with respect to the direction Dₐ of the directional antenna 12 is predefined and known.

Of course, the directions Dₐ and D_{c} do not have to be parallel as long as their alignment relative to each other is known.

The alignment information, i.e. the information about the relative alignment of the direction D_{c} of the camera 14 and the direction Dₐ of the directional antenna 12, is stored in the control unit 22 of the directional antenna 12 and/or in the analysis unit 18 of the spectrum analyzer 16.

The directional antenna 12 and the camera 14 are connected to the spectrum analyzer 16 and its analysis unit 18 via a cable 24.

Of course, a wireless connection to the spectrum analyzer 16 and its analysis unit 18 of the directional antenna 12 and the camera 14 is also possible.

The camera 14 may also be connected to the control unit 22 of the directional antenna 12.

The analysis unit 18 receives signals from the directional antenna 12 and the video captured by the camera 14 via the cable 24 and/or wirelessly.

The analysis unit 18 is able to evaluate and process the signals from the directional antenna 12 and the video from the camera 14 to create a highlighted video in the manner described below.

Further, the spectrum analyzer 16 has a display unit 26 and the analysis unit 18 transmits the highlighted video and other information to be communicated to the display unit 26.

The highlighted video and the other information is then displayed by the display unit 26.

In the shown embodiment, the direction finding system 10 also comprises a device 30 separate from the spectrum analyzer 16. The device 30 can be established by a network connected device being connected to the spectrum analyzer 16 directly or indirectly.

In the embodiment shown in Figure 1, the device 30 is a mobile device, like a smartphone or a tablet.

The separate device 30 may also be a mounted device, like a TV screen or a refrigerator door. However, this mounted device may also be established by a network connected device.

In the shown embodiment, the device 30 comprises a display unit 26' and also a camera 14' on the side opposite to the display unit 26.

Further, the device 30 also has several sensors being motion and/or location sensors, like an accelerometer, a GPS sensor, a gyroscope, a compass, a tilt sensor or the like, as well as a control unit 22' for evaluating the data of the sensors 20 and for communicating wirelessly with the control unit 22 of the directional antenna 12 and/or the analysis unit 18 of the spectrum analyzer 16.

Using the sensors 20 of the directional antenna 12 and the sensors 20' of the device 30, the control unit 22 of the directional antenna 12, the control unit 22' of the device 30 and/or the analysis unit 18 are/is able to determine the alignment of the direction D_{c} of the camera 14' of the device 30 and the direction Dₐ of the directional antenna 12. Thus, the alignment information is known if the camera 14' of the device 30 is used as the camera of the direction finding system 10.

In order to locate a source 32 of a target signal, for example an interfering signal, the direction finding system 10 may be used as illustrated in Figure 2.

In the situation of Figure 2, the source 32 of a signal is located in a building 34 in the top floor.

The source 32 may emit a signal of interest, like a radio frequency signal that interferes with a telecommunication signal, and therefore the location of the source 32 has to be determined.

In order to find the source 32 of the target signal, the user U holds the directional antenna 12 in one of his hands and the spectrum analyzer 16 in the other hand.

Of course, it is also possible that the user U uses the separate device 30 in his other hand instead of the spectrum analyzer 16.

In the beginning, the user U rotates the directional antenna 12 clockwise or counter-clockwise and observes the magnitude of the target signal picked up by the directional antenna 12 on the display unit 26 of the spectrum analyzer 16.

For this purpose and also later on, the magnitude of the signal picked up by the directional antenna 12 is analyzed by the analysis unit 18 and displayed in the display unit 26.

Once the user U has found the direction with the highest magnitude, the user U points the directional antenna 12 in this direction.

The source 32 of the target signal lies then within the field of view of the camera 14.

If the analysis unit 18 has not done so until now, it switches into direction finding mode (either automatically or by the user U).

In this mode, the analysis unit 18 receives the video captured by the camera 14 and also the signals picked up by the directional antenna 12.

The analysis unit 18 then determines the direction the target signal is coming from, i.e. the source 32 with respect to the directional antenna 12.

The direction that the target signal is coming from is determined based on the signals of the directional antenna 12 by the analysis unit 18 using triangulation or any other known technique.

Because the analysis unit 18 has also access to the alignment information, it can determine the direction of the source 32 with respect to the camera 14 meaning that it is able to locate the pixels of the camera 14 that correspond to the direction the target signal is coming from. Thus, the analysis unit 18 identifies the sections of the video frames that include the source 32.

The analysis unit 18 then highlights the section of the video frames in the video captured by the camera 14. This way, a highlighted video is created by the analysis unit 18.

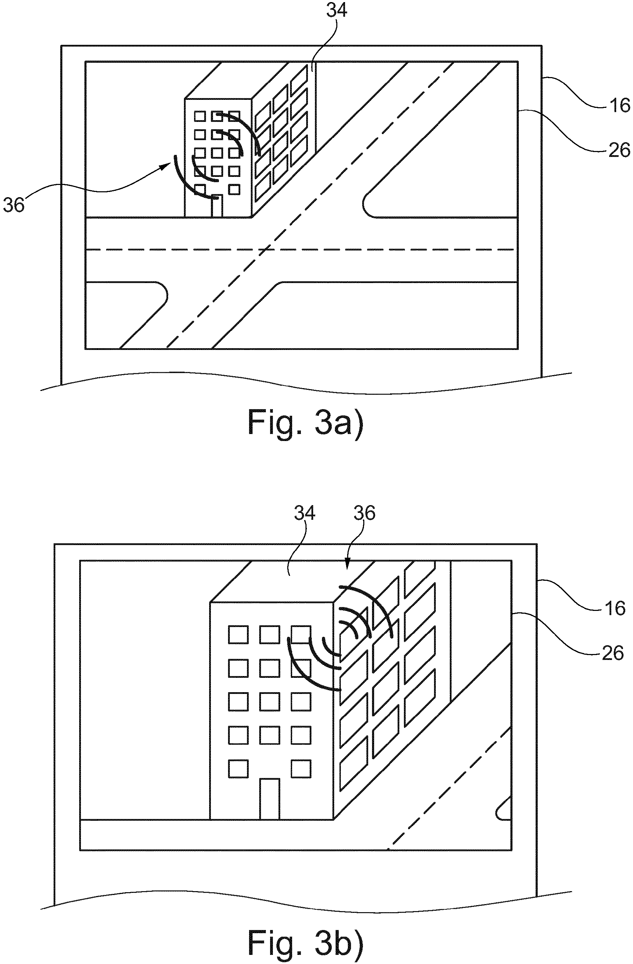

The highlighted video is then transmitted to the display unit 26 and shown on the display unit 26. Figure 3a shows an example of the highlighted video in a situation resembling that of Figure 2.

The highlighting 36 is done by using several sections of concentric circles, wherein the center of the concentric circles is located at the pixels that the target signal is coming from.

Of course, many other visualizations for highlighting 36 can be used, like an X, a full circle or an arrow, to name a few.

The number of the concentric circles and the size of the sections can be chosen to represent the magnitude of the target signal.

Of course, the magnitude of the target signal may also be displayed as a figure or in words by the display unit 26.

The camera 14, 14' is able to capture a video of the surroundings in real-time and is configured to do so and to transmit the video to the analysis unit 18.

The analysis unit 18 is also capable and configured to receive the captured video from the camera 14, 14' and to highlight the video creating the highlighted video in real-time.

Further, the analysis unit 18 is capable and configured to transmit the highlighted video in real-time to the display unit 26, which is in turn capable and configured to show the highlighted video in real-time.

This way, the user can move around with the directional antenna 12 in order to follow the direction of the highlighting 36 in the highlighted video.

Even while moving, the highlighting 36 in the video is being updated so that the user U is guided to the source 32. Because the direction of the source 32 is highlighted in the live video of the real world surrounding the user U, an augmented reality is created for the user U.

In Figures 3a to 3c, the display unit 26 in different situations during a hunt for the source 32 of the target signal is shown.

In the situation shown in Figure 3a, the highlighting 36 points at a building 34 behind a crossroad.

In this situation, the magnitude of the target signal is small so that only two circles are used.

The user deducts from the video that the target signal is coming from the building 34 and that the source 32 must be located within the building.

The user U moves then closer to the building 34 as shown in Figure 3b.

Being now closer to the building 34, the highlighting 36 gets more precise and points at the upper part or the top floor of the building 34.

Further, the magnitude of the signal has increased as indicated by an additional, third concentric circle used to highlight the direction.

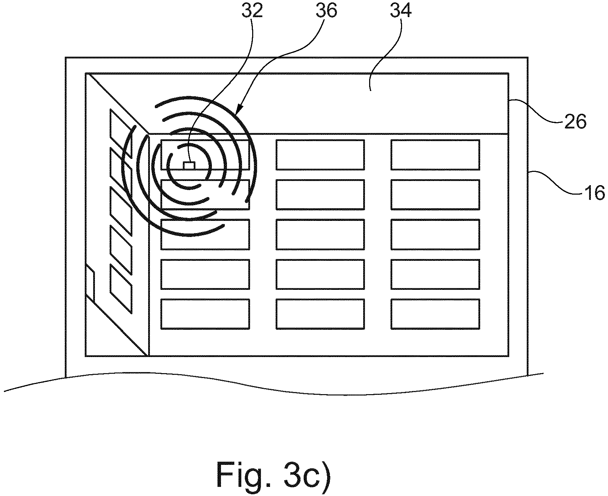

The user U then moves to the side of the building 34 to get an even closer look at the building 34. In the situation shown in Figure 3c, the user U stands besides the building 34 and sees a side view of the building 34.

Now, the first window of the top floor is highlighted meaning that the source 32 must be in the area of the window. In fact, the source 32 can be seen through the window.

The magnitude of the target signal has increased even further as indicated by yet another, fourth concentric circle used to highlight the direction. Further, the sections of the concentric circles have been enlarged.

Thus, the user U has easily located the source 32 of the target signal in a very intuitive and fast way.

In a different situation, the user may also use the separate device 30 in addition or as an alternative. The video may then be captured by the camera 14' and the display unit 26' of the device 30 may be the display unit used.

In this case, the analysis unit 18 may be part of the control unit 22' of the device 30.

Thus, using the device 30, the spectrum analyzer 16 is not necessary.

Of course, the device 30 may be used to display the highlighted video using the display unit 26', but the analysis unit 18 of the spectrum analyzer 16 is used for the processing.

## Claims

1. Direction finding system (10) for locating a source (32) of a target signal, in particular a radio frequency signal, with at least one directional antenna (12), at least one camera (14, 14') for capturing a video and at least one analysis unit (18),
wherein the direction (D_{c}) of the at least one camera (14, 14') and the direction (Dₐ) of the at least one directional antenna (12) are aligned with respect to each other in a known, especially predefined relation,
wherein the at least one camera (14, 14') and the at least one directional antenna (12) are electrically and/or wirelessly connected to the at least one analysis unit (18),
the analysis unit (18) being configured to receive the video captured by the at least one camera (14, 14'); to receive signals picked up by the at least one directional antenna (12); to determine the direction the target signal is coming from; and to highlight the direction the target signal is coming from in the video creating a highlighted video.

2. Direction finding system (10) according to claim 1, **characterized in that** alignment information about the alignment of the direction (D_{c}) of the at least one camera (14, 14') with respect to the direction (Dₐ) of the at least one directional antenna (12) is predefined and stored in the at least one analysis unit (18) or the at least one analysis unit (18) is configured to determine the alignment information.

3. Direction finding system (10) according to claim 1 or 2, **characterized in that** the direction finding system (10) comprises at least one display unit (26, 26') electrically and/or wirelessly connected to the at least one analysis unit (18), the at least one analysis unit (18) being configured to transmit the highlighted video to the at least one display unit (26, 26') and the at least one display unit (26, 26') being configured to show the highlighted video.

4. Direction finding system (10) according to any one of the preceding claims, **characterized in that** the at least one camera (14, 14') is configured to capture the video in real-time, and that the at least one analysis unit (18) is configured to create the highlighted video in real-time and, in particular, that the at least one display unit (26, 26') is configured to show the highlighted video in real time.

5. Direction finding system (10) according to any one of the preceding claims, **characterized in that** the at least one analysis unit (18) is configured to determine the magnitude of the target signal and to create the highlighting in the video depending on the determined magnitude.

6. Direction finding system (10) according to any one of the preceding claims, **characterized in that** the at least one camera (14, 14') and the at least one directional antenna (12) point in the same direction.

7. Direction finding system (10) according to any one of the preceding claims, **characterized in that** the at least one camera (14, 14') is mounted on the at least one directional antenna (12).

8. Direction finding system (10) according to any one of the preceding claims, **characterized in that** the at least one analysis unit (18) comprises the at least one display unit (26, 26').

9. Direction finding system (10) according to any one of the preceding claims, **characterized in that** the direction finding system (10) comprises at least one device (30) separate from the at least one analysis unit (18), wherein the at least one device (30) includes the at least one display unit (26') and/or the at least one camera (14').

10. Direction finding system (10) according to claim 9, **characterized in that** the device (30) is a network connected device, in particular a mobile device, for instance a smart phone or a tablet, and/or a mounted device, for instance a TV-screen or a refrigerator door.

11. Direction finding system (10) according to any one of the preceding claims, **characterized in that** the at least one analysis unit (18) is at least part of a spectrum analyzer (16).

12. Method for locating a source of a target signal, in particular a radio frequency signal, using a direction finding system (10), in particular according to any one of the preceding claims, having at least one directional antenna (12), at least one camera (14, 14') for capturing a video and at least one analysis unit (18), the method comprising the following steps:
a) pointing the at least one directional antenna (12) towards the direction with the highest magnitude of the target signal,
b) pointing the at least one camera (14, 14') in essentially the same direction as the at least one directional antenna (12),
c) receiving by the analysis unit (18) the video captured by the at least one camera (14, 14') and signals picked up by the at least one directional antenna (12),
d) determining by the at least one analysis unit (18) the direction the target signal is coming from, and
e) highlighting in the video by the at least one analysis unit (18) the direction the target signal is coming from, creating a highlighted video using alignment information about the alignment of the direction of the at least one camera (14, 14') with respect to the direction of the at least one directional antenna (12),
wherein the alignment information about the alignment is predefined and stored in the at least one analysis unit (18) or determined by the at least one analysis unit (18).

13. Method according to claim 12, **characterized in that** the highlighted video is shown on at least one display unit (26, 26') of the direction finding system (10).

14. Method according to claim 12 or 13, **characterized in that** the video is captured in real-time, that the highlighted video is created in real-time and, in particular, that the highlighted video is shown in real time.

15. Method according to any one of the claim 12 to 14, **characterized in that** the magnitude of the target signal is determined by the at least one analysis unit (18) and the highlighting in the video is created depending on the determined magnitude.
